# DEMANDE DE BREVET EUROPEEN

(11) **EP 4 683 174 A1**
(43) Date de publication de la demande: **21.01.2026**
(21) Numéro de dépôt: 25189163.6
(22) Date de dépôt: 11.07.2025
(51) Int. Cl.: H02K 1/18, H02K 7/00, H02K 5/06, H02K 15/028

(54) **MACHINE ÉLECTRIQUE POUR VÉHICULE AUTOMOBILE**

(30) Priorité: 16.07.2024 FR 2407799
(71) Demandeur: Ampere SAS, 92100 Boulogne-Billancourt (FR)
(72) Inventeur: FRADET, Valentin, 78084 Boulogne-Billancourt (FR); FONTA, Samuel, 92100 GUYANCOURT (FR)
(74) Mandataire: Renault Group

(57) **Abrégé**

Une machine électrique pour véhicule automobile (1, 40) comprend au moins un carter (2), un arbre (3) disposé au sein du carter (2) et un ensemble rotor-stator-de-petite-taille-radiale (4, 5) ou un ensemble rotor-stator-de-grande-taille-radiale (21, 22). Le rotor (4, 21) est solidaire de l'arbre de transmission (3) et le stator (5, 22) étant fixé sur le carter (2). Le carter (2) de la machine électrique (1,40) comprend au moins un premier ensemble de fixation (12) et un deuxième ensemble de fixation (13). Le premier ensemble de fixation (12) comportant des premiers moyens de fixation (14) solidaires du carter (2) pour fixer l'ensemble rotor-stator-de-petite-taille-radiale (4,5) dans le carter (2). Le deuxième ensemble de fixation (13) comportant des deuxièmes moyens de fixation (15) solidaires du carter (2) pour fixer l'ensemble rotor-stator-de-grande-taille-radiale (21, 22) dans le carter (2). Les premiers moyens de fixation (14) étant distincts des deuxièmes moyens de fixation (15).

## Description

La présente invention concerne le domaine des véhicules automobiles, et plus particulièrement les machines électriques équipant ces véhicules automobiles.

Les véhicules automobiles électriques ou hybrides utilisent des machines électriques, notamment des machines électriques avec au moins un stator et un rotor, qui sont souvent des machines à flux radial. Dans de telles machines, le rotor et le stator sont coaxiaux et agencés l'un autour de l'autre, de telle sorte que des bobinages embarqués sur le stator, respectivement le rotor et des éléments magnétiques présents sur le rotor, respectivement le stator, génèrent un flux magnétique selon une direction radiale par rapport à un axe de rotation de la machine électrique.

Les machines électriques à flux radial peuvent être disponibles en diverses puissances. Elles sont conçues pour être intégrées dans différents types de véhicules selon les besoins spécifiques en puissance de ces véhicules. La puissance d'une machine électrique est notamment influencée par le dimensionnement radial de ses deux composants principaux que sont le stator et le rotor.

Ainsi, pour augmenter la puissance d'une machine électrique, on peut augmenter le dimensionnement radial du stator et du rotor. Inversement, pour créer une machine de moindre puissance, on réduit leurs dimensions radiales.

Actuellement, la fabrication de machines électriques de diverses puissances nécessite des lignes de production distinctes. Cette spécificité est due au fait que la taille de chaque composant de la machine électrique doit être adaptée aux dimensions radiales du rotor et du stator. Des éléments tels que le carter, l'arbre de transmission, les moyens de fixation pour l'ensemble rotor/stator, ainsi que d'autres composants, sont conçus en fonction de ces dimensions. Par conséquent, une machine électrique de grande puissance doit être assemblée sur une ligne de production différente de celle utilisée pour une machine électrique de petite puissance, puisque les pièces constitutives de ces machines ne sont pas interchangeables.

Cette séparation des lignes de production entraîne une perte de temps et d'énergie, car il est nécessaire de maintenir et d'opérer plusieurs lignes de production distinctes. De plus, les différences entre les pièces requièrent la fabrication de composants uniques pour chaque type de machine avant l'assemblage, ce qui augmente les coûts et la complexité de production.

L'objectif de l'invention décrite dans le présent document est donc de pallier les désavantages de l'art antérieur en limitant le nombre de pièces distinctes nécessaires pour réaliser deux machines électriques de différentes puissances.

La présente invention a ainsi pour principal objet une machine électrique pour véhicule automobile comprenant au moins un carter, un arbre de transmission disposé au moins en partie au sein du carter et un ensemble rotor/stator de petite taille radiale ou un ensemble rotor/stator de grande taille radiale, l'ensemble rotor/stator utilisé étant logé dans le carter, son rotor étant solidaire de l'arbre de transmission et son stator étant fixé sur le carter via un ensemble de fixation, la machine électrique étant caractérisée en ce qu'elle comprend au moins un premier ensemble de fixation et un deuxième ensemble de fixation, le premier ensemble de fixation comportant des premiers moyens de fixation solidaires du carter pour fixer l'ensemble rotor/stator de petite taille dans le carter, et le deuxième ensemble de fixation comportant des deuxièmes moyens de fixation solidaires du carter pour fixer l'ensemble rotor/stator de grande taille dans le carter, les premiers moyens de fixation étant distincts des deuxièmes moyens de fixation.

La machine électrique est ici une machine électrique à flux radial, dans laquelle le rotor et le stator sont des éléments cylindriques montés autour d'un axe commun formé par l'axe de rotation de l'arbre de transmission. On a plus particulièrement ici une machine électrique à rotor interne, avec le stator qui entoure le rotor.

La machine électrique selon l'invention peut être soit une machine électrique dite de petite puissance, soit une machine électrique dite de grande puissance. Il convient de comprendre par les termes petite puissance et grande puissance qu'une machine électrique de grande puissance à une puissance plus élevée qu'une machine de petite puissance.

La puissance de la machine électrique est ici déterminée par le dimensionnement radial de l'ensemble rotor/stator. Un ensemble rotor/stator de grande taille radiale est apte à produire une puissance plus grande que la puissance produite par un ensemble rotor/stator de petite taille radiale. On entend par les termes petite taille radiale et grande taille radiale qu'un ensemble rotor/stator de grande taille radiale présente un dimensionnement radial plus grand qu'un ensemble rotor/stator de petite taille radiale. Ainsi, le rotor et le stator de l'ensemble rotor/stator de grande taille radiale ont respectivement un dimensionnement radial plus grand que le dimensionnement radial du rotor et du stator de l'ensemble rotor/stator de petite taille radiale.

On comprend donc qu'une machine électrique comportant un ensemble rotor/stator de grande taille radiale est une machine électrique de grande puissance, tandis qu'une machine électrique comprenant un ensemble rotor/stator de petite taille radiale est une machine électrique de petite puissance.

Le premier ensemble de fixation et le deuxième ensemble de fixation permettent de fixer le stator et le rotor au sein du carter, indépendamment du fait que cela soit un rotor et un stator d'un ensemble rotor/stator de petite taille radiale ou un rotor et un stator d'un ensemble rotor/stator de grande taille radiale.

Pour cela, les premiers moyens de fixation du premier ensemble de fixation et les deuxièmes moyens de fixation du deuxième ensemble de fixation sont distincts. Autrement dit, les premiers moyens de fixation et les deuxièmes moyens de fixation ne coïncident pas et sont donc des éléments structurels différents.

Il convient de noter que lorsque la machine électrique est assemblée en fixant un ensemble rotor/stator, qu'il soit de petite taille radiale ou de grande taille radiale, l'un des deux ensembles de fixation est opérationnel pour fixer ledit ensemble rotor/stator, tandis que l'autre des deux ensembles de fixation n'est pas opérationnel.

Le fait d'avoir les deux ensembles de fixation à demeure sur le carter, et de rendre opérationnel l'un ou l'autre selon la taille de l'ensemble rotor/stator, permet de ne prévoir qu'une taille de carter pour l'assemblage de l'un ou l'autre des deux ensembles, dès lors que le dimensionnement du carter est suffisamment grand pour loger l'ensemble rotor/stator de grande taille. Cela permet ainsi de standardiser les pièces autres que l'ensemble rotor/stator. Il convient donc de comprendre que le carter, l'arbre de transmission, et l'ensemble des pièces de la machine électrique, autre que l'ensemble rotor/stator, sont des pièces communes à la fois à une machine électrique de petite puissance et à une machine électrique de grande puissance. De cette façon, lors d'un assemblage sur une ligne de production, il suffit de changer seulement l'ensemble rotor/stator pour obtenir soit une machine électrique de petite puissance, soit une machine électrique de grande puissance.

Selon une caractéristique optionnelle de l'invention, les deuxièmes moyens de fixation sont disposés radialement autour des premiers moyens de fixation.

Il convient ainsi de comprendre que les premiers moyens de fixation sont disposés radialement autour de l'axe de rotation de l'arbre de transmission, et les deuxièmes moyens de fixation sont disposés radialement autour des premiers moyens de fixation.

La disposition radiale se réfère à l'arrangement où les premiers moyens de fixation et les deuxièmes moyens de fixation sont disposés dans des directions perpendiculaires à l'axe de rotation.

Le terme "autour" indique que les deuxièmes moyens de fixation sont disposés radialement plus éloignés de l'axe de rotation que les premiers moyens de fixation.

Il convient de noter que lorsque la machine électrique est une machine électrique de grande puissance, équipée d'un ensemble rotor/stator de grande taille radiale, c'est le deuxième ensemble de fixation qui est opérationnel et le premier ensemble de fixation qui n'est pas opérationnel. Lorsque la machine électrique est une machine électrique de petite puissance, équipée d'un ensemble rotor/stator de petite taille radiale, c'est le premier ensemble de fixation qui est opérationnel et le deuxième moyen de fixation qui n'est pas opérationnel.

Selon une caractéristique optionnelle de l'invention, au moins un des premiers moyens de fixation et au moins un des deuxièmes moyens de fixation sont disposés dans une même direction radiale perpendiculaire à un axe de rotation de l'arbre de transmission.

On comprend donc que le deuxième moyen de fixation, le premier moyen de fixation et l'axe de rotation de l'arbre de transmission sont disposés de manière à être alignés sur une même droite. Cette droite correspond à la direction radiale le long de laquelle le deuxième moyen de fixation et le premier moyen de fixation sont positionnés.

L'alignement des deuxièmes moyens de fixation et des premiers moyens de fixation est déterminé en considérant une droite passant par le centre ou l'axe central de ces moyens de fixation.

Préférentiellement, chacun des premiers moyens de fixation est disposé dans une direction radiale où est également disposé l'un des deuxièmes moyens de fixation.

Selon une caractéristique optionnelle de l'invention, les premiers moyens de fixation et les deuxièmes moyens de fixation sont configurés pour coopérer avec des organes de fixation communs, qui peuvent indifféremment coopérer avec les premiers moyens de fixation pour fixer l'ensemble rotor/stator de petite taille ou avec les deuxièmes moyens de fixation pour fixer l'ensemble rotor/stator de grande taille.

Les organes de fixation peuvent par exemple être des vis. Le terme "commun" explicite le fait qu'un organe de fixation peut être utilisé à la fois pour fixer un ensemble rotor/stator de petite taille radiale lorsque celui-ci est assemblé dans le carter et que le premier ensemble de fixation est opérationnel, et également pour fixer un ensemble rotor/stator de grande taille radiale lorsque celui-ci est assemblé dans le carter et que le deuxième ensemble de fixation est opérationnel.

On comprend donc que l'un ou l'autre des deux ensembles de fixation est considéré comme opérationnel lorsqu'il coopère avec un organe de fixation afin de fixer un ensemble rotor/stator.

De cette façon, on réduit le nombre de pièces différentes entre une machine de petite puissance et une machine de grande puissance puisque l'organe de fixation peut être utilisé pour une machine grande puissance ou une machine petite puissance. Cela facilite donc l'assemblage de ces machines dans une ligne de production où elles sont produites.

Selon une caractéristique optionnelle de l'invention, les premiers moyens de fixation et les deuxièmes moyens de fixation sont des fûts taraudés formés dans une paroi du carter.

On comprend donc que les fûts taraudés du premier ensemble de fixation sont les premiers moyens de fixations et que les fûts taraudés du deuxième ensemble de fixation sont les deuxièmes moyens de fixation.

Puisque les premiers et deuxièmes moyens de fixation sont des fûts taraudés, ils sont ainsi conçus pour coopérer efficacement avec les organes de fixation afin de fixer soit l'ensemble rotor/stator de petite taille radiale, lorsqu'il s'agit d'un fût taraudé correspondant à un premier moyen de fixation, soit l'ensemble rotor/stator de grande taille, lorsqu'il s'agit d'un fût taraudé correspondant à un deuxième moyen de fixation.

On comprend que pour que les fûts des deux ensembles de fixation distincts puissent coopérer avec le même organe de fixation, ces fûts doivent présenter un même diamètre de filetage.

Il convient de comprendre que lorsque le premier ou le deuxième ensemble de fixation est opérationnel, respectivement les premiers ou les deuxièmes moyens de fixations coopèrent avec les organes de fixation grâce à leur forme de fût taraudé. Au contraire, lorsque le premier ou le deuxième ensemble de fixation n'est pas opérationnel, respectivement les premiers ou les deuxièmes moyens de fixations ne coopèrent pas avec les organes de fixation.

Par exemple, lorsqu'un ensemble rotor/stator de grande taille est installé dans le carter pour former une machine électrique de grande puissance, chacun des fûts taraudés du deuxième ensemble de fixation, c'est-à-dire chacun des deuxièmes moyens de fixation, coopère avec un organe de fixation et rend opérationnel le deuxième ensemble de fixation. Dans ce contexte, le premier ensemble de fixation n'est alors pas opérationnel et les fûts taraudés du premier ensemble de fixation, c'est-à-dire les premiers moyens de fixation, ne coopèrent pas avec un organe de fixation.

Il convient de noter que lors du montage d'une machine électrique de grande puissance, l'ensemble rotor/stator de grande taille présente des orifices en regard des deuxièmes moyens de fixation, et les organes de fixation sont insérés dans les deuxièmes moyens de fixation et les orifices pour fixer l'ensemble rotor/stator de grande taille radiale. Lors du montage d'une machine électrique de petite puissance, l'ensemble rotor/stator de petite taille présente des orifices en regard des premiers moyens de fixation, et les organes de fixation sont insérés dans les premiers moyens de fixation et les orifices pour fixer l'ensemble rotor/stator de petite taille radiale.

Selon une caractéristique optionnelle de l'invention, les premiers moyens de fixation et les deuxièmes moyens de fixation sont formés dans la même paroi du carter.

La machine électrique, qu'elle soit de petite puissance ou de grande puissance, peut comprendre une partie de commande électronique et une partie de sortie moteur disposées de part et d'autre du carter. La partie de commande électronique est configurée pour fournir un courant électrique à l'ensemble rotor/stator, dans un mode d'alimentation électrique, et pour récupérer un courant électrique généré par la rotation de l'ensemble rotor/stator, dans un mode de récupération d'énergie, tandis que la partie de sortie moteur utilise ou génère, selon le mode mis en œuvre, l'énergie mécanique de la rotation de l'arbre de transmission.

La paroi du carter dans laquelle les premiers moyens de fixation et deuxièmes moyens de fixation sont formées constitue une paroi de fermeture disposée du côté de la partie de sortie moteur. L'ensemble stator/rotor est monté dans le carter par une ouverture agencée à l'opposé de la paroi de fermeture, jusqu'à ce que le stator entre en butée sur les premiers moyens de fixation et/ou deuxièmes moyens de fixation.

Selon une caractéristique optionnelle de l'invention, les organes de fixation comprennent au moins une tête et une tige munie d'une extrémité filetée apte à coopérer avec un des premiers moyens de fixation ou avec un des deuxièmes moyens de fixation.

Les têtes des organes de fixation sont disposées du côté de la partie de commande électronique. Lors du montage, l'organe de fixation est donc inséré du côté de l'ouverture opposée à la paroi de fermeture puis, lorsque les premiers moyens de fixation et/ou les deuxièmes moyens de fixation sont des fûts taraudés, serré par vissage de la partie filetée dans le fût taraudé correspondant. La partie de commande électronique peut alors être rapportée sur le carter afin de venir proche du stator.

Les fûts taraudés correspondant aux premiers moyens de fixation et/ou aux deuxièmes moyens de fixation sont disposés de telle manière que, lorsque l'extrémité filetée coopère avec le fût taraudé, la tige de l'organe de fixation s'étend dans une direction parallèle à l'axe de rotation de l'arbre de transmission.

Il convient ainsi de comprendre que, dans cette direction parallèle à l'axe de rotation de l'arbre de transmission allant de la tête de l'organe de fixation à son extrémité filetée, la tige de l'organe de fixation traverse le stator. L'organe de fixation est dimensionné de telle sorte que, lorsque la tête de l'organe de fixation est en appui contre la face du stator qui est en regard de la partie de commande électronique de la machine électrique, l'extrémité filetée dépasse de la face opposée du stator pour pouvoir coopérer avec le fût taraudé correspondant à un des premiers moyens de fixation ou à un des deuxièmes moyens de fixation.

Selon une caractéristique optionnelle de l'invention, le stator comprend au moins un bossage radial muni d'un orifice, la tige de l'organe fixation étant logée dans ledit orifice.

Il convient de comprendre que le bossage radial augmente localement et radialement le dimensionnement du stator, c'est-à-dire dans une direction radiale perpendiculaire à l'axe de rotation de l'arbre de transmission. Cette augmentation d'épaisseur permet de disposer en périphérie du stator les organes de fixation, sans pénaliser la quantité de matière du stator participant à la formation du champ électromagnétique. Le bossage radial s'étend d'une extrémité axiale du stator à l'autre, de sorte à être d'un côté en contact avec la tête de l'organe de fixation et de l'autre côté en contact avec le fût taraudé correspondant à un des premiers moyens de fixation ou à un des deuxièmes moyens de fixation.

L'orifice est un orifice traversant le stator dans une direction parallèle à l'axe de rotation de l'arbre de transmission. Cet orifice permet de faire passer la tige de l'organe de fixation à travers le bossage radial du stator afin de maintenir en place le stator et donc l'ensemble rotor/stator dans le carter.

Le stator peut comprendre une pluralité de bossages radiaux, puisque la machine électrique comprend un organe de fixation pour chacun des premiers moyens de fixation ou des deuxièmes moyens de fixation. Dans ce cas, il peut y avoir un bossage radial pour chaque organe de fixation, de sorte que la tige de l'organe de fixation passe à travers l'orifice de chaque bossage radial, ce qui permet de tenir solidement le stator dans le carter. Lorsqu'il y a une pluralité de bossages radiaux, ils peuvent par exemple être disposés à égale distance les uns des autres et être arrangés angulairement régulièrement de manière à entourer le stator. De cette façon, lorsque leurs orifices sont traversés par les organes de fixation, la fixation du stator au carter est solide.

Selon une caractéristique optionnelle de l'invention, le stator est en contact avec les premiers moyens de fixation et/ou avec les deuxièmes moyens de fixation.

Plus particulièrement, lorsqu'il y a un bossage radial, le bossage radial du stator est en contact avec un des premiers moyens de fixation ou des deuxièmes moyens de fixation. Il convient de préciser que lorsque l'ensemble rotor/stator est de grande taille, le stator peut être en contact avec chacun des premiers moyens de fixation, tandis que le bossage radial et l'orifice traversant sont disposés au niveau d'un des deuxièmes moyens de fixation.

Grâce à cela, l'organe de fixation est entièrement logé dans le stator et dans le fût taraudé correspondant à un des premiers moyens de fixation ou à un des deuxièmes moyens de fixation, sans qu'aucune partie, à l'exception de sa tête, ne soit exposée en cas de choc. Cette disposition réduit ainsi les risques de pliure ou de rupture dudit organe de fixation.

L'invention concerne également un procédé d'assemblage permettant notamment la fabrication de machines électriques de grande puissance ou de petite puissance telles que précédemment évoquées. Plus particulièrement, selon l'invention, un procédé d'assemblage d'une machine électrique peut comprendre au moins les étapes suivantes :
1) identification d'une référence d'un premier type de machine électrique ou d'une référence d'un deuxième type de machine électrique,
2) assemblage d'une machine électrique selon la référence indiquée :
   - si la référence correspond au premier type de machine électrique, assemblage d'une machine électrique comprenant un ensemble rotor/stator de petite taille radiale telle que précédemment évoquée,
   - si la référence correspond au deuxième type de machine électrique, assemblage d'une machine électrique comprenant un ensemble rotor/stator de grande taille radiale telle que précédemment évoquée.

Le procédé permet ainsi de produire deux types de machines sur la même chaîne de production. En effet, l'ensemble des pièces, à l'exception de l'ensemble rotor/ stator, est semblable dans les machines électriques de petite puissance et les machines électriques de grande puissance. De cette façon, l'assemblage de la machine électrique est essentiellement le même. La seule étape différente est celle du positionnement de l'ensemble rotor/stator, qui varie selon qu'il s'agit d'une machine électrique de petite puissance ou d'une machine électrique de grande puissance.

Ainsi, pour une machine électrique de petite puissance, on installe un ensemble rotor/ stator de petite taille radiale, tel que décrit dans la description. Pour une machine de grande puissance, on installe un ensemble rotor/stator de grande taille radiale. Pour cela, il suffit d'insérer l'ensemble rotor/stator correspondant à la machine électrique souhaitée en poussant l'ensemble rotor/stator contre la paroi du carter équipée des premiers moyens de fixation et des deuxièmes moyens de fixation, puis de le fixer soit à l'aide du premier ensemble de fixation, soit à l'aide du deuxième ensemble de fixation, ces ensembles de fixations étant tous deux présents dans la machine, quel que soit son type.

Ce procédé permet donc un gain non négligeable en temps et en énergie, puisque les pièces, à l'exception de l'ensemble rotor/stator, restent les mêmes entre les deux types de machines électriques. Ainsi, il est possible de produire plus de machines électriques plus rapidement, et de changer facilement la production en passant d'une machine électrique de grande puissance à une machine électrique de petite puissance.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig.1] est une coupe dans un plan axial d'une machine électrique de petite puissance rendant visible un carter logeant un ensemble rotor/stator de petite taille radiale, un arbre de transmission, une partie de commande électronique et une partie de sortie moteur;
[Fig.2] est une coupe dans un plan axial d'une machine électrique de grande puissance rendant visible le carter, l'arbre de transmission, la partie de commande électronique et la partie de sortie moteur visibles sur la [Fig.1], le carter logeant ici un ensemble rotor/stator de grande taille radiale;
[Fig.3] est une coupe dans un plan radial du carter de la machine électrique de la [Fig.1] ou de la [Fig.2] dans laquelle un ensemble rotor/stator n'est pas représenté ;
[Fig.4] est une coupe dans le même plan radial que celui de la [Fig.3] de la machine électrique de petite puissance de la [Fig.1];
[Fig.5] est une coupe dans le même plan radial que celui de la [Fig.3] de la machine électrique de grande puissance de la [Fig.2].

Les caractéristiques et les variantes de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites ci-après de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

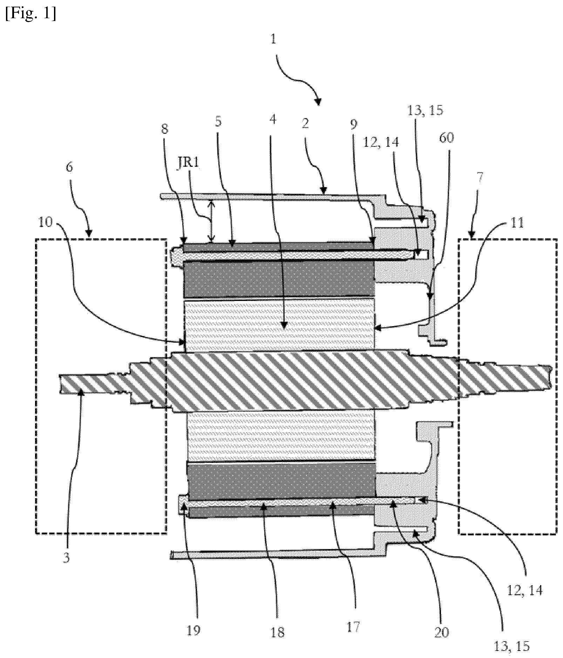

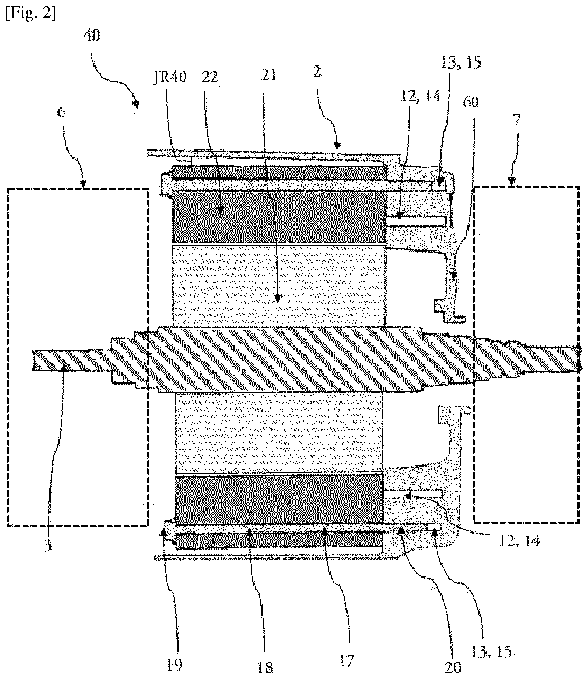

Sur les figures suivantes, on représente sur la [Fig.1] une machine de petite puissance et sur la [Fig.2] une machine de grande puissance. Il convient de noter que le choix du dimensionnement radial d'un ensemble rotor/stator de ces machines électriques dépend de la puissance désirée pour la machine électrique. Ainsi, pour une machine électrique de grande puissance, un ensemble rotor/stator de grande taille radiale est utilisé, tandis que pour une machine électrique de petite puissance, un ensemble rotor/stator de petite taille radiale est privilégié.

On comprend donc que la machine électrique de petite puissance et la machine électrique de grande puissance ont des parties communes et ne diffèrent l'une de l'autre que par la taille radiale de l'ensemble rotor/stator et par des ensembles de fixation distincts qui peuvent être opérationnels ou non opérationnels selon la machine électrique qui est assemblée.

La [Fig.1] est une coupe dans un plan axial de la machine électrique de petite puissance 1. La machine électrique de petite puissance 1 comprend notamment un carter 2 conçu pour accueillir indifféremment un ensemble rotor/stator de petite taille radiale ou un ensemble rotor/stator de grande taille radiale, un arbre de transmission 3 qui peut coopérer indifféremment avec un ensemble rotor/stator de petite taille radiale ou un ensemble rotor/stator de petite taille radiale, et elle comprend un ensemble rotor/ stator de petite taille radiale 4,5. En outre, la machine électrique 1 comprend une partie de commande électronique 6 et une partie de sortie moteur 7.

Plus précisément, le carter 2 est une enceinte qui entoure certains composants de la machine électrique de petite puissance 1. L'ensemble rotor/stator de petite taille radiale 4,5 est ainsi logé dans ce carter 2, et une partie de l'arbre de transmission 3 est également disposée dans le carter 2. Le carter 2 comprend une paroi de fermeture 60 qui s'étend perpendiculairement à un axe de rotation A de l'arbre de transmission 3, et en regard de la partie de sortie moteur 7. Cette paroi de fermeture 60 est traversée par l'arbre de transmission 3.

L'ensemble rotor/stator 4,5 de petite taille radiale comprend un rotor de petite taille radiale 4 et un stator de petite taille radiale 5. Ces éléments sont dits de petite taille radiale par opposition à un ensemble rotor/stator de grande taille radiale qui a un dimensionnement radial de son stator plus grand que le stator de petite taille radiale 5, et un dimensionnement radial de son rotor plus grand que le rotor de petite taille radiale 4. Par exemple, et de manière non limitative, le diamètre du rotor de petite taille radiale 4 peut être de 121,8mm, tandis que celui du rotor de grande taille radiale est de 152,3mm. De même, le diamètre du stator de petite taille radiale 5 peut être de 122,8mm, alors que celui du stator de grande taille radiale est de 153,3mm.

Le stator de petite taille radiale 5 est une partie stationnaire de la machine électrique de petite puissance 1. Il peut comprendre des éléments conducteurs qui, lorsqu'ils sont alimentés en électricité, génèrent un champ magnétique, ou qui inversement, lorsqu'ils sont soumis à un champ magnétique, permettent de générer un courant électrique en sortie de la machine. Ces éléments conducteurs peuvent notamment être disposés axialement dans des encoches formées au sein du stator, et le bobinage formé par l'ensemble de ces éléments conducteurs liés entre eux présente aux extrémités axiales du stator des chignons, ici non représentés sur les figures.

La partie de commande électronique 6 est notamment configurée pour fournir le courant électrique aux éléments conducteurs du stator de petite taille radiale 5, et/ou récupérer le courant électrique et/ou exciter le rotor de petite taille radiale 4. La partie de commande électronique 6 comportent une pluralité de composants électroniques permettant de piloter la connexion électrique avec les éléments conducteurs. Du fait de cette connexion électrique, il convient de s'assurer que la position de la partie de commande électronique 6 par rapport au stator de petite taille radiale 5 et au rotor de petite taille radiale 4 soit bien conforme à la position théorique souhaitée, et notamment axialement.

Le rotor de petite taille radiale 4 est un composant de la machine électrique tournant autour de l'axe de rotation A. Il peut, par exemple, être formé d'un ensemble de tôles empilées et comporter des bobines enroulées sur pôle réagissant au champ magnétique produit au sein du stator de petite taille radiale 5, ce qui a pour effet, en pilotant un champ magnétique tournant, de générer un mouvement de rotation autour de cet axe de rotation A.

L'arbre de transmission 3 est relié au rotor de petite taille radiale 4 ; ainsi, lorsque ce rotor 4 tourne, l'arbre de transmission 3 tourne également autour de l'axe de rotation A. On comprend ainsi que le stator de petite taille radiale 5, le rotor de petite taille radiale 4 et l'arbre de transmission 3 partagent un axe commun de rotation, qui est l'axe de rotation A. L'arbre de transmission 3 transmet ensuite l'énergie mécanique du mouvement de rotation à la partie de sortie moteur 7.

Le stator petite taille radiale 5 et le rotor de petite taille radiale 4 ont tous deux une forme cylindrique entourant l'axe de rotation A. Dans l'exemple illustré d'un moteur à flux radial et à rotor interne, le stator de petite taille radiale 5 entoure le rotor de petite taille radiale 4, qui lui-même entoure l'arbre de transmission 3. Le champ magnétique au sein du stator de petite taille radiale 5 passe radialement entre ce stator 5 et le rotor de petite taille radiale 4.

Le stator de petite taille radiale 5 est composé d'une première extrémité axiale 8 et d'une deuxième extrémité axiale 9, correspondant respectivement aux extrémités du cylindre dans une direction axiale parallèle à l'axe de rotation A.

Le rotor de petite taille radiale 4 possède une première terminaison axiale 10 et une deuxième terminaison axiale 11. Le rotor de petite taille radiale 4 est centré axialement par rapport au stator de petite taille radiale 5, ce qui fait que ses terminaisons coïncident axialement avec les extrémités du stator de petite taille radiale 5. Autrement dit, la première terminaison axiale 10 du rotor de petite taille radiale 4 est positionnée au même niveau axial que la première extrémité axiale 8 du stator de petite taille radiale 5, et la deuxième terminaison axiale 11 du rotor de petite taille radiale 4 est positionnée au même niveau axial que la deuxième extrémité axiale 9 du stator de petite taille radiale 5.

La machine électrique de petite puissance 1 comprend également un premier ensemble de fixation 12 et un deuxième ensemble de fixation 13.

Le premier ensemble de fixation 12 permet de fixer l'ensemble rotor/stator de petite taille radiale 4,5 dans le carter 2 et dans ce cas le premier ensemble de fixation 12 est opérationnel tandis que le deuxième ensemble de fixation 13 n'est pas opérationnel. Au contraire, le deuxième ensemble de fixation 13 permet de fixer un ensemble rotor/ stator de grande taille radiale dans le carter 2 et dans ce cas le deuxième ensemble de fixation 13 est opérationnel tandis que le premier ensemble de fixation 12 n'est pas opérationnel.

Dans ce cas-ci, étant donné qu'il s'agit d'une machine électrique de petite puissance 1, ladite machine 1 comprend l'ensemble rotor/stator de petite taille radiale 4,5. C'est donc tel qu'illustré, le premier ensemble de fixation 12 qui est opérationnel et qui va être décrit par la suite, le deuxième ensemble de fixation 13 n'ayant ici pas de fonction particulière.

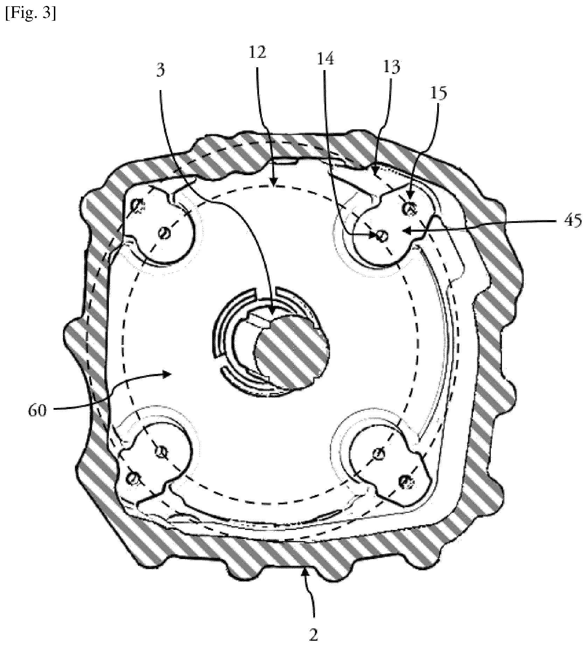

Le premier ensemble de fixation 12 comprend des premiers moyens de fixation 14, au nombre de quatre dans ce mode de réalisation, tel que cela est visible sur la [Fig.3]. Le deuxième ensemble de fixation 13 comprend lui des deuxièmes moyens de fixation.

Les premiers moyens de fixation 14 sont ici des fûts taraudés formé dans une paroi du carter 2 et puisqu'ils sont opérationnels, chacun des premiers moyens de fixation 14 coopère avec un organe de fixation 17. Les premiers moyens de fixation 14 sont ici réalisés dans la paroi de fermeture 60, bien qu'il soit possible qu'ils soient réalisés dans d'autres parois.

L'organe de fixation 17 est conçu pour coopérer avec le fût taraudé, correspondant à un des premiers moyens de fixation 14, afin de maintenir en place l'ensemble rotor/ stator de petite taille radiale 4,5. Plus précisément, lorsque le stator de petite taille radiale 5 est disposé dans le carter 2, l'organe de fixation 17 est configuré pour plaquer la deuxième extrémité axiale 9 du stator de petite taille radiale 5 contre le premier moyen de fixation 14.

On comprend donc que, lors du montage d'un ensemble rotor/stator de petite taille radiale 4,5 pour obtenir une machine électrique de petite puissance, les premiers moyens de fixation 14 en coopérant avec l'organe de fixation 17 rendent le premier ensemble de fixation 12 opérationnel. En revanche, le deuxième ensemble de fixation 13, puisque non opérationnels, ne comportent pas d'organes de fixation coopérant avec un des deuxièmes moyens de fixation.

L'organe de fixation 17 comprend une tige 18 et une tête 19, la tige 18 présentant une extrémité filetée 20. Cette extrémité filetée 20 est conçue pour coopérer avec le fût taraudé correspondant à un des premiers moyens de fixation 14, tandis que la tige 18 traverse le stator de petite taille radiale 5. Ce dernier comporte un orifice destiné à être traversé par la tige 18. Ainsi, la tige 18 traverse le stator de petite taille radiale 5 de sa première extrémité axiale 8 à sa deuxième extrémité axiale 9 en suivant une direction perpendiculaire à l'axe de rotation A.

Il est à noter que dans ce mode de réalisation, le stator de petite taille radiale 5 comprend plusieurs orifices, chacun étant destiné à être traversé par un organe de fixation 17 afin de fixer l'ensemble rotor/stator de petite taille radiale 4,5 au carter 2. En effet, étant donné que la machine électrique de petite puissance comprend quatre premiers moyens de fixation 14, elle comprend donc quatre organes de fixation 17 et donc quatre orifices.

Lorsque le stator de petite taille radiale 5 est logé au sein du carter 2, il est inséré par une ouverture située à l'opposé de la paroi de fermeture 60 portant les premiers moyens de fixation 14, jusqu'à ce que la deuxième extrémité axiale 9 du stator de petite taille radiale 5 soit en contact avec une face de butée de ces premiers moyens de fixation 14. Dans cette position, les orifices formés dans le stator 5 se retrouvent en regard des premiers moyens de fixation 14, les organes de fixation 17 sont alors insérés dans les orifices correspondants, de sorte que la tige 18 de l'organe de fixation 17 traverse le stator de petite taille radiale 5, permettant à son extrémité filetée 20 de coopérer avec le taraudage du fût taraudé correspondant aux premiers moyens de fixation 14. La tête 19 de l'organe de fixation 17 est alors positionnée en contact avec la première extrémité axiale 8 du stator de petite taille radiale 5, contribuant ainsi au plaquage de ce stator 5 contre les premiers moyens de fixation 14.

Les faces de butée des premiers moyens de fixation 14, sur lesquelles le stator de petite taille radiale 5 s'appuie, forment une surface de positionnement de référence 45 assurant que le stator soit bien plaqué contre ces premiers moyens de fixation 14 et permettant ainsi de garantir son positionnement correct dans le carter 2, notamment par rapport à la partie de commande électronique 6.

Grâce au premier moyen de fixation 14, l'ensemble rotor/stator de petite taille radiale 4,5 peut ainsi être correctement positionné dans un carter 2 conçu pour accueillir un ensemble rotor/stator de petite taille radiale 4,5 ou un ensemble rotor/stator de grande taille radiale.

Il convient de noter que, puisque le carter 2 est conçu pour accueillir indifféremment un ensemble rotor/stator de grande puissance ou de petite puissance, lorsque l'ensemble rotor/stator de petite taille radiale 4,5 est assemblé dans le carter, cet ensemble 4,5 est disposé à distance radialement du carter. On comprend par là qu'il y a un jeu radial JR1 entre l'ensemble rotor/stator de petite taille radiale 4,5 et le carter 2.

La [Fig.2] est une coupe dans un plan axial de la machine électrique de grande puissance 40.

De manière similaire à ce qui a été précédemment décrit pour la machine électrique petite puissance 1, la machine électrique de grande puissance 1 comprend un carter 2 conçu pour accueillir indifféremment un ensemble rotor/stator de petite taille radiale ou un ensemble rotor/stator de grande taille radiale, ainsi qu'un arbre de transmission 3 commun à chacune de ces ensembles. En outre, la machine électrique de grande puissance 40 comprend une partie de commande électronique 6 et une partie de sortie moteur 7 ainsi qu'un premier ensemble de fixation 12 et un deuxième ensemble de fixation 13. Le carter 2, l'arbre de transmission 3, la partie de commande électronique 6, la partie de sortie moteur 7, le premier ensemble de fixation 12 et le deuxième ensemble de fixation 13 sont donc des pièces communes à la machine électrique de la [Fig.1] et à cette machine électrique de grande puissance 40. La description faite dans la description de la [Fig.1] par rapport à ces éléments s'appliquant donc à l'identique pour la machine électrique de grande puissance 40.

Une des différences de cette machine de grande puissance 40 par rapport à la machine de petite puissance 1 réside dans l'ensemble stator/rotor logé dans le carter 2, qui est ici un ensemble rotor/stator de grande taille radiale 21,22.

Le dimensionnement axial du stator de grande taille radiale 22 et du rotor de grande taille radiale 21, ainsi que la présence d'extrémités axiales et de terminaisons axiales, sont similaires à l'ensemble rotor/stator de petite taille radiale 4,5. De la sorte, lorsque l'ensemble rotor/stator de grande taille radiale 21,22 est en appui par une extrémité axiale contre la paroi de fermeture 60, il est à la même distance de la partie de commande électronique 6 que ne l'est l'ensemble rotor/stator de petite taille radiale quand c'est lui qui est monté dans le carter 2.

La différence réside ici dans le dimensionnement radial, c'est-à-dire dans le diamètre du stator de grande taille radiale 22, qui est plus grand que celui du stator de petite taille radiale 5, et dans le diamètre du rotor de grande taille radiale 21, qui est plus grand que celui du rotor de petite taille radiale 4.

Afin de fixer cet ensemble rotor/stator de grande taille radiale 21,22 au sein du carter 2, le deuxième ensemble de fixation 13 est opérationnel, tandis que le premier ensemble de fixation 12 ne l'est pas.

Le deuxième ensemble de fixation 13 comprend ainsi des deuxièmes moyens de fixation 15, au nombre de quatre dans ce mode de réalisation, tel que cela est visible sur la [Fig.3].

Il convient de noter que puisque le deuxième ensemble de fixation 13 est opérationnel, les deuxièmes moyens de fixation 15 coopèrent avec des organes de fixation 17. En revanche, puisque le premier ensemble de fixation 12 n'est pas opérationnel, les premiers moyens de fixation 14 ne coopèrent pas avec des organes de fixation 17.

Afin de faciliter cette coopération, les deuxièmes moyens de fixation 15, de manière similaire aux premiers moyens de fixation 14, sont des fûts taraudés formé dans la paroi de fermeture 60 du carter 2.

L'organe de fixation 17 utilisé dans les deuxièmes moyens de fixation 15 est similaire à celui utilisé dans les premiers moyens de fixation 14 de la machine électrique de petite puissance 1 précédemment décrite. Ainsi, ces organes de fixation sont identiques et peuvent être utilisés indistinctement que ce soit dans le montage d'une machine de petite puissance ou dans celui d'une machine de grande puissance. On comprend donc que, pour pouvoir assembler au choix un ensemble rotor/stator de petite taille radiale ou de grande taille radiale dans le carter 2, les dimensions des fûts taraudés correspondant aux premiers moyens de fixation 14 et les dimensions des fûts taraudés correspondant aux deuxièmes moyens de fixation 15 sont donc les mêmes.

L'organe de fixation 17 comprend donc une tige 18 présentant une extrémité filetée 20 et une tête 19, ladite tige 18 traversant, dans une direction perpendiculaire à l'axe de rotation A, le stator de grande taille radiale 22. Pour ce faire, le stator de grande taille radiale 22 comporte des orifices destinés à être traversés par l'organe de fixation 17, et plus précisément quatre orifices puisqu'il y a quatre organes de fixation 17 associés aux quatre deuxièmes moyens de fixation 15 dans ce mode de réalisation.

L'organe de fixation 17 est donc conçu pour coopérer avec un des deuxièmes moyens de fixation 15 afin de maintenir en place l'ensemble rotor/stator de grande taille radiale 21,22. De manière similaire à la machine électrique de petite puissance 1, lorsque le stator de grande taille radiale 22 est disposé dans le carter 2, l'organe de fixation 17 est configuré pour plaquer une des extrémités axiales du stator de grande taille radiale 22 contre un des deuxièmes moyens de fixation 15.

Les deuxièmes moyens de fixation 15 sont disposés à une distance plus grande de l'axe de rotation A par rapport aux premiers moyens de fixation 14. En d'autres termes, ils sont disposés radialement sur la paroi de fermeture 60 à une distance plus importante que la distance séparant l'axe de rotation A des premiers moyens de fixation 14. Cette disposition permet de faire correspondre les deuxièmes moyens de fixation 15 avec les orifices du stator de grande taille 22 destinés à être traversés par la tige 18 de l'organe de fixation 17. Ainsi, l'organe de fixation 17 permet de fixer correctement le stator de grande taille radiale 22 et donc l'ensemble rotor/stator de grande taille radiale 21,22.

Lors du montage d'un ensemble rotor/stator de grande taille radiale 21/22 pour obtenir une machine électrique de grande puissance 40, le deuxième ensemble de fixation 13 est opérationnel puisque chacun des deuxièmes moyens de fixation 15 coopère avec un organe de fixation 17. Au contraire, le premier ensemble de fixation 12 n'est pas opérationnel puisque les premiers moyens de fixation 14 ne coopèrent pas avec les organes de fixation 17.

Il convient de noter que, puisque le carter 2 est conçu pour accueillir indifféremment un ensemble rotor/stator de grande puissance ou de petite puissance, lorsque l'ensemble rotor/stator de grande taille radiale 21,22 est assemblé dans le carter 2, cet ensemble 21,22 est disposé à distance radialement du carter 2, cette distance étant plus petite que la distance séparant radialement l'ensemble rotor/stator de petite taille radiale 4,5 du carter 2 dans la machine électrique de petite puissance 1 de la [Fig.1]. On comprend par là qu'il y a un jeu radial JR40 entre l'ensemble rotor/stator de grande taille radiale 21,22 et le carter 2, qui est plus petit que le jeu radial JR1 entre l'ensemble rotor/stator de petite taille radiale 4,5 et le carter 2.

La [Fig.3] est une coupe dans un plan radial du carter 2 de la machine électrique selon la [Fig.1] ou la [Fig.2] dans laquelle l'ensemble rotor/stator n'est pas représenté, notamment pour pouvoir mieux observer comment le premier ensemble de fixation 12 et le deuxième ensemble de fixation 13 sont disposés.

Il convient donc de comprendre que le carter 2, le premier ensemble de fixation 12, le deuxième ensemble de fixation 13, et l'arbre de transmission 3 représentés sur cette figure sont des éléments communs aux deux machines qui ont été illustrés sur les figures 1 et 2, et qui sont donc utilisés aussi bien dans une machine de grande puissance tel que décrit à la [Fig.2] que dans une machine électrique de petite puissance tel que décrit à la [Fig.1].

Le premier ensemble de fixation 12 entoure radialement l'arbre de transmission 3, et plus particulièrement son axe de rotation A. Cela signifie que ses premiers moyens de fixation 14, au nombre de quatre, sont disposés radialement autour de l'arbre de transmission 3 et de son axe de rotation A. Sur cette figure, seuls les premiers moyens de fixation 14 sont représentés et non les organes de fixation 17, puisque aucune machine électrique n'est montée dans le carter 2 et que donc le premier ensemble de fixation 12 et le deuxième ensemble de fixation 13 sont tous deux non opérationnel. On peut ainsi observer que chaque premier moyen de fixation 14 est situé dans la paroi de fermeture 60 à une distance radiale égale de l'axe de rotation A.

Le deuxième ensemble de fixation 13 entoure radialement l'arbre de transmission 3 ainsi que son axe de rotation A, mais également le premier ensemble de fixation 12. Ainsi, il convient de comprendre que ses deuxièmes moyens de fixation 15 sont disposés radialement autour de l'axe de rotation A et également autour des premiers moyens de fixation 14. Les deuxièmes moyens de fixation 15 sont donc disposés dans la paroi de fermeture 60 à une distance plus grande de l'axe de rotation A que la distance séparant les premiers moyens de fixation 14 de l'axe de rotation A.

Dans ce mode de réalisation, chacun des premiers moyens de fixation 14 est disposé avec un deuxième moyen de fixation 15 dans une direction radiale qui est perpendiculaire au à l'axe de rotation A. Ainsi, dans cette direction radiale, chaque premier moyen de fixation 14 est positionné entre l'axe de rotation A et un deuxième moyen de fixation 15.

Grace à cet alignement d'un premier moyen de fixation 14 et d'un deuxième moyen de fixation 15, ces deux moyens de fixation 14, 15 forment une paire de moyens de fixation. Il convient de noter que la surface de positionnement de référence 45 est la même pour chaque paire de moyens de fixation, c'est à dire pour deux moyens de fixation alignés radialement.

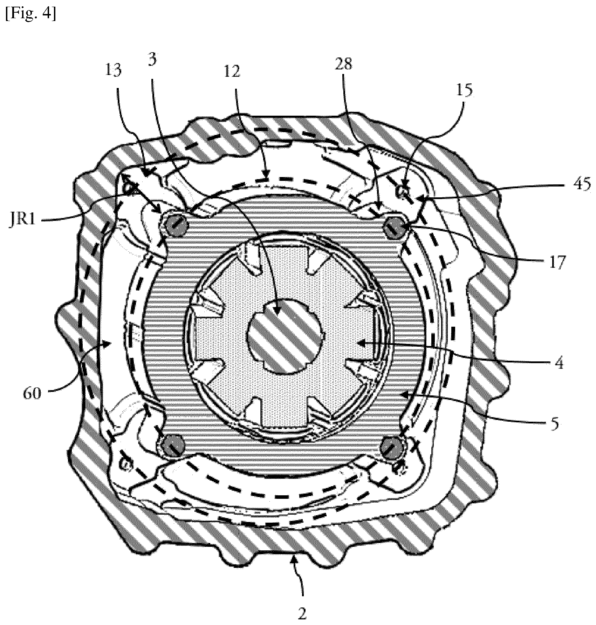

La [Fig.4] est une coupe dans le même plan radial que celui de la [Fig.3] de la machine électrique de petite puissance 1 de la [Fig.1].

Il convient donc de comprendre que cette figure représente un carter 2 et ses éléments tels qu'ils sont représentés sur la [Fig.3], ainsi qu'un ensemble rotor/stator de petite taille radiale 4,5 qui participe à former la machine électrique de petite puissance 1. Pour cela, les organes de fixation 17 ont été insérés dans les orifices prévus à cet effet dans le stator de petite taille radiale 5, afin que leurs extrémités filetées 20 coopèrent avec les fûts taraudés correspondant aux premiers moyens de fixations 14.

Cette figure permet de mieux observer que le rotor de petite taille radiale 4 et le stator de petite taille radiale 5 sont des cylindres, et de mieux appréhender que le stator de petite taille radiale 5 entoure le rotor de petite taille radiale 4, qui, lui, entoure l'axe de rotation A. Cette figure rend également visible que le stator de petite taille radiale 5 comprend au moins un bossage radial 28.

Les bossages radiaux 28 sont des augmentations locales du dimensionnement radial du stator de petite taille radiale 5, le dimensionnement radial étant mesuré perpendiculairement à l'axe de rotation A. Ils sont configurés de manière à augmenter localement le dimensionnement radial du stator de petite taille radiale 5 sur toute sa dimension axiale. Les bossages radiaux 28 s'étendent parallèlement à l'axe de rotation A de manière continue d'une extrémité axiale à une autre du stator de petite taille radiale 5.

Dans cette machine de petite puissance 1, le stator de petite taille radiale 5 comprend quatre bossages radiaux 28 disposés à intervalles réguliers sur sa circonférence. Chacun des bossages radiaux 28 comprend un orifice tel que décrit précédemment. Chacun de ces orifices s'étend au sein d'un des bossages radiaux 28, parallèlement à l'axe de rotation A, afin de permettre l'insertion des organes de fixation 17 et de faciliter la coopération de leur extrémité filetée 20 avec les premiers moyens de fixation 14, permettant ainsi la fixation de l'ensemble rotor/stator de petite taille radiale 4,5.

Cette [Fig.4] rend également clairement visible que dans la machine électrique de petite puissance 1, le deuxième ensemble de fixation 13 n'est pas opérationnel dans la mesure où le stator de petite taille radiale 5 ne recouvre pas les fûts taraudés correspondant aux deuxièmes moyens de fixation 15 du deuxième ensemble de fixation 13. On peut également observer le jeu radial JR1 entre le stator de petite taille radiale 5 et le carter 2. On comprend ainsi que le carter 2 est surdimensionné par rapport à l'ensemble rotor/stator de petite taille radiale 4,5, mais peut ainsi être commun aux deux types de machine électrique.

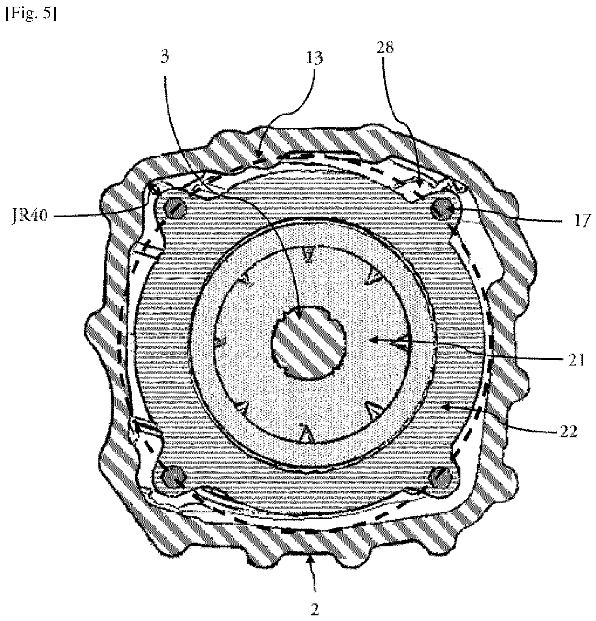

La [Fig.5] est une coupe dans le même plan radial que celui de la [Fig.3] de la machine électrique de grande puissance 40 de la [Fig.2].

On comprend que cette figure illustre le carter 2 et ses composants conformément à la [Fig.3] ainsi qu'un ensemble rotor/stator de grande taille radiale 21,22 qui participe à constituer la machine électrique de grande puissance 40 représentée dans la [Fig.2]. À cet effet, les organes de fixation 17 ont été placés dans les orifices du stator de grande taille radiale 22, de manière à ce que leurs extrémités filetées 20 coopèrent avec les deuxièmes moyens de fixation 15.

De manière similaire au stator de petite taille radiale 5, le stator de grande taille radiale 22 comprend quatre bossages radiaux 28 qui augmentent localement son dimensionnement radial sur toute sa dimension axiale. Chacun de ces bossages radiaux 28 comprend un orifice, tel que décrit précédemment, s'étendant au sein d'un des bossages radiaux 28, parallèlement à l'axe de rotation A. Cela permet l'insertion des organes de fixation 17 et la coopération de leur extrémité filetée 20 avec les deuxièmes moyens de fixation 15, assurant ainsi la fixation de l'ensemble rotor/stator de grande taille radiale 21,22.

Ces deux figures 4 et 5 rendent ainsi clairement visibles que l'on passe d'une machine à l'autre en gardant le même carter 2 et les mêmes organes de fixation 17 et en changeant uniquement la taille radiale de l'ensemble rotor/stator, et la position où sont placés les organes de fixation 17.

On va maintenant décrire un procédé d'assemblage d'une machine électrique qui offre la possibilité de construire soit une machine de petite puissance 1, comme décrite dans les figures 1 et 4, soit une machine de grande puissance 40, comme décrite dans les figures 2 et 5. Avec un grand nombre de pièces standard, ce procédé d'assemblage permet donc, sur une même chaîne de fabrication, sans qu'il soit nécessaire d'interrompre la production à chaque changement de référence de machine à assembler, l'assemblage soit d'une machine électrique de petite puissance 1 soit d'une machine électrique de grande puissance 40.

Le procédé d'assemblage commence par une étape d'identification, durant laquelle un opérateur ou une machine repère sur la chaîne de fabrication une référence permettant de déterminer s'il s'agit d'assembler une machine électrique de petite puissance 1 ou une machine électrique de grande puissance 40.

Ensuite, le procédé d'assemblage se poursuit par une étape d'assemblage. Lorsque la machine électrique à assembler est identifiée comme une machine de petite puissance 1, on assemble d'abord certaines pièces communes aux machines de petites et grandes puissances, par exemple le carter 2, puis on installe un ensemble rotor/stator de petite taille radiale 4,5 en utilisant le premier ensemble de fixation 12 et donc les premiers moyens de fixation 14. Cela implique d'insérer les organes de fixation 17 dans les orifices du stator de petite taille radiale 5, de façon à ce que leurs extrémités filetées 20 coopèrent avec les premiers moyens de fixation 14.

En revanche, si la machine électrique à assembler est identifiée comme une machine de grande puissance 40, le procédé consiste également à assembler d'abord certaines pièces communes aux deux types de machines, puis à installer un ensemble rotor/stator de grande taille radiale 21,22 en utilisant le deuxième ensemble de fixation 13 et donc les deuxièmes moyens de fixation 15. Cela implique d'insérer les organes de fixation 17 dans les orifices du stator de grande taille radiale 22, de manière à ce que leurs extrémités filetées 20 coopèrent avec les deuxièmes moyens de fixation 15.

Telle qu'elle vient d'être décrite, la présente invention atteint bien le but qu'elle s'était fixé, en proposant une machine électrique pour véhicule automobile comprenant un carter, un arbre de transmission, un ensemble rotor/stator, ainsi qu'un premier ensemble de fixation et un deuxième ensemble de fixation permettant respectivement de fixer un ensemble rotor/stator de petite taille radiale ou de fixer un ensemble rotor/stator de grande taille radiale. Grâce à cette conception, il est possible d'utiliser des composants standardisés pour fabriquer des machines électriques de différentes puissances, rendant ainsi leur processus de fabrication plus simple et économique.

La présente invention ne saurait toutefois se limiter aux moyens et configurations décrits et illustrés ici et elle s'étend également à tout moyen et toute configuration équivalente ainsi qu'à toute combinaison techniquement opérante de tels moyens.

## Revendications

1. Machine électrique pour véhicule automobile (1, 40) comprenant au moins un carter (2), un arbre de transmission (3) disposé au moins en partie au sein du carter (2) et un ensemble rotor/stator de petite taille radiale (4, 5) ou un ensemble rotor/stator de grande taille radiale (21, 22), l'ensemble rotor/stator utilisé étant logé dans le carter (2), son rotor (4, 21) étant solidaire de l'arbre de transmission (3) et son stator (5, 22) étant fixé sur le carter (2) via un ensemble de fixation **caractérisé en ce que** la machine électrique (1,40) comprend au moins un premier ensemble de fixation (12) et un deuxième ensemble de fixation (13), le premier ensemble de fixation (12) comportant des premiers moyens de fixation (14) solidaires du carter (2) pour fixer l'ensemble rotor/stator de petite taille (4,5) dans le carter (2), et le deuxième ensemble de fixation (13) comportant des deuxièmes moyens de fixation (15) solidaires du carter (2) pour fixer l'ensemble rotor/stator de grande taille (21, 22) dans le carter (2), les premiers moyens de fixation (14) étant distincts des deuxièmes moyens de fixation (15).

2. Machine électrique (1, 40) selon la revendication 1, dans laquelle les deuxièmes moyens de fixation (15) sont disposés radialement autour des premiers moyens de fixation (14).

3. Machine électrique (1, 40) selon l'une quelconque des revendications 1 ou 2, dans laquelle au moins un des premiers moyens de fixation (14) et au moins un des deuxièmes moyens de fixation (15) sont disposés dans une même direction radiale perpendiculaire à un axe de rotation (A) de l'arbre de transmission (3).

4. Machine électrique (1, 40) selon l'une quelconque des revendications 1 à 3, dans laquelle les premiers moyens de fixation (14) et les deuxièmes moyens de fixation (15) sont configurés pour coopérer avec des organes de fixation (17) communs, qui peuvent indifféremment coopérer avec les premiers moyens de fixation (14) pour fixer l'ensemble rotor/stator de petite taille (4,5) ou avec les deuxièmes moyens de fixation (15) pour fixer l'ensemble rotor/stator de grande taille (21, 22).

5. Machine électrique (1,40) selon l'une quelconque des revendications 1 à 4, dans laquelle les premiers moyens de fixation (14) et les deuxièmes moyens de fixation (15) sont des fûts taraudés formés dans une paroi du carter (2).

6. Machine électrique (1,40) selon la revendication 5, dans laquelle les premiers moyens de fixation (14) et les deuxièmes moyens de fixation (15) sont formés dans la même paroi du carter (2).

7. Machine électrique (1,40) selon l'une quelconque des revendications 5 ou 6 en combinaison avec la revendication 4, dans laquelle les organes de fixation (17) comprennent au moins une tête (19) et une tige (18) munie d'une extrémité filetée (20) apte à coopérer avec un des premiers moyens de fixation (14) ou avec un des deuxièmes moyens de fixation (15).

8. Machine électrique (1, 40) selon la revendication 7, dans laquelle le stator (5, 22) comprend au moins un bossage radial (28) muni d'un orifice, la tige (18) de l'organe de fixation (17) étant logée dans ledit orifice.

9. Machine électrique (1, 40) selon l'une quelconque des revendications 5 à 8, dans laquelle le stator (5, 22) est en contact avec les premiers moyens de fixation (14) et/ou avec les deuxièmes moyens de fixation (15).

10. Procédé d'assemblage d'une machine électrique (1, 40) comprenant au moins les étapes suivantes :
1) identification d'une référence d'un premier type de machine électrique (1) ou d'une référence d'un deuxième type de machine électrique (40),
2) assemblage d'une machine électrique selon la référence indiquée :
- si la référence correspond au premier type de machine électrique (1), assemblage d'une machine électrique (1) comprenant un ensemble rotor/stator de petite taille radiale (4,5) selon l'une quelconque des revendications 1 à 9,
- si la référence correspond au deuxième type de machine électrique (40), assemblage d'une machine électrique (40) comprenant un ensemble rotor/stator de grande taille radiale (21, 22) selon l'une quelconque des revendications 1 à 9.
